# EUROPÄISCHE PATENTSCHRIFT

(11) **EP 2 913 617 B1**
(45) Veröffentlichungstag und Bekanntmachung des Hinweises auf die Patenterteilung: **17.10.2018**
(21) Anmeldenummer: 15152435.2
(22) Anmeldetag: 26.01.2015
(51) Int. Cl.: F28F 7/02, B28C 3/00, C04B 38/06, F28F 21/04, F28F 21/08

(54) **Verfahren zur Herstellung eines Wärmetauschelementes, ein mit diesem Verfahren erhaltenes Element und eine dieses Element verwendende Klimatisierungsanlage**
Method for producing a heat exchanger element, an element obtained by means of this method and an air conditioning system using this element
Procédé de fabrication d'un élément d'échange thermique, élément obtenu avec ce procédé et installation de climatisation utilisant cet élément

(30) Priorität: 31.01.2014 IT BZ20140005
(43) Veröffentlichungstag der Anmeldung: 02.09.2015
(73) Patentinhaber: Starni, Icilio, 39049 Sterzing (IT)
(72) Erfinder: Starni, Icilio, 39049 Sterzing (IT)
(74) Vertreter: Ausserer, Anton

(56) Entgegenhaltungen:
- EP-A2- 0 133 307
- US-A1- 2010 252 248

## Beschreibung

Die Erfindung bezieht sich auf ein Verfahren zur Herstellung eines Wärmetauchelementes gemäß dem Oberbegriff des Anspruchs 1, ein mit diesem Verfahren erhaltenes Element und eine dieses Element verwendende Klimatisierungsanlage. US 2010/252248 offenbart einen derartiges Verfahren.

Die Anwendung auf dem technischen Gebiet betrifft Elemente für Klimatisierungsanlagen wie zum Beispiel jene beim Gebäudebau, Wohnbau, Industriebau, landwirtschaftlichen und handwerklichen Gebäuden. Die Anwendung beschränkt sich jedoch nicht auf diese Gebiete. Das erfindungsgemäß hergestellte Element kann in fast jeder Klimatisierungsanlage, zum Beispiel auch in einer solchen für Fahrzeuge, Verwendung finden.

Es ist eine Vielzahl von Wärmetauschelementen bekannt. Die Aufgabe dieser Elemente liegt darin, einen Fluidstrom (flüssig oder gasförmig) auf einer möglichst wenig aufwändigen Art abzukühlen. Dazu müssen Kühlfluids und/oder andere Verfahren für den Wärmeaustausch verwendet werden.

Das Dokument D1 EP 0 133 307 beschreibt ein Verfahren zur Herstellung von Ton, umfassend
(1) einen Verfahrensschritt, in dem 100 Gewichtsanteilen von keramischen Pulvern und/oder keramischen Fasern, 2,0 bis 50 Gewichtsanteilen von papiermachenden organischen Fasern und/oder 3 bis 200 Gewichtsanteilen aus Bergleder gemischt werden;
(2) einen Verfahrensschritt, in dem eine geformter Körper aus der resultierenden Mischung hergestellt wird; und
(3) einen Verfahrensschritt, in dem der geformte Körper einer Brennbehandlung unterworfen wird.

Aus der Veröffentlichung US 20030150234 ist zum Beispiel eine Kühlvorrichtung mit mindestens einer Gefriereinheit bekannt, die einen bienenwabenartigen Aufbau aufweist, der vorne, hinten, oben und unten Öffnungen aufweist und der Art angeordnet ist, dass die durch die Vorderöffnungen eingebrachte, abzukühlende Luft aus den hinteren Öffnungen austritt. Es sind überdies eine Zufuhr von kaltem Wasser, die durch die oberen Öffnungen des schiefen, bienenwabenartigen Aufbaus zugeführt wird, und ein Abschnitt vorgesehen, der das Abwasser aus den Öffnungen unterhalb des schiefen, bienenwabenartigen Aufbaus aufnimmt. Diese Vorrichtung umfasst der überdies Luftgebläse in den vorderen Öffnungen Presse schiefen, bienenwabenartigen Aufbaus und erlaubt den Luftaustritt hinter des bienenwabenartigen Aufbaus, wo eine der bienenwabenartigen Zellen eine Höhe von 200 bis 800 mm besitzt. Die Kühlvorrichtung besitzt eine hohe Wärmeeffizienz, ein tiefes Verhältnis Flüssigkeit/Gas, einen kleinen Druckverlust und erlaubt Raum zu sparen. Bei dieser Lösung wird die Luft über eine Flüssigkeit (Wasser) gekühlt, die von oben nach unten fließt. Es ist eine kontinuierliche Wasserzufuhr erforderlich.

In der italienischen Patentanmeldung BO 2011 A 000337 wird ein Verfahren zur Umsetzung von Energie beschrieben (insbesondere Sonnenenergie; das Verfahren umfasst einige Schritte:
- erhitzen eines ersten Endes (E1) eines Basiskörpers (2), der aus einem porösen Material besteht, über elektromagnetische Strahlen insbesondere über Sonnenstrahlen, die auf ein Absorberelement (3) einfallen, das mit dem Basiskörper (2) im Bereich des ersten Endes (E1) thermisch gekoppelt ist;
- zuführen mittels einer verdampfenden Flüssigkeit des Basiskörpers (2) im Bereich eines zweiten, dem ersten Ende (E1) abgewandten Endes (E2) der Art, dass die verdampfende Flüssigkeit innerhalb des Basiskörpers (2) eindringt und innerhalb des Basiskörpers aufgrund der Kapillarität diffundiert, und
- umwälzen eines Wärmetauschfluids unter Kontaktierung mit dem Basiskörper (2) im Bereich des ersten Endes.

Dieses Verfahren erfordert eine kontinuierliche Energiezufuhr.

Die US2010/252248 beschreibt eine Vorrichtung zur Speicherung und zum Wärmetauschen. Das Element zur chemischen Speicherung der Wärme wird durch Formbildung hergestellt. Zur Speicherung der Wärme werden chemische Elemente verwendet zum Beispiel Calciumhydroxid. Zum Binden wird ein Mineralhaltiger Ton verwendet. Um das Binden und die Dichte zu erhöhen wird ein organisches Material verwendet. Wenn das Element in Verbindung mit Wärme tritt gibt es Wasser ab welche durch die Kanäle im Element austritt. Die Kanäle im Element erfüllen die Aufgabe beim "Aufladen" der chemischen Elemente Wasser zuzuführen. Der Wärmeaustausch mit dem zu kühlenden Fluid findet über die Seitenwand statt. Die zu kühlende Flüssigkeit passiert nicht das Element. Im Element befinden sich nur die Kanäle zur Zuführung und Abführung von Wasser das durch eine chemische Reaktion entstanden ist. In der US2010/252248 wird eine chemische Kühlung beschrieben und nicht eine Kühlung die durch die Kapillarwirkung der Kanäle stattfindet.

Die Aufgabe der vorliegenden Erfindung ist die Ausführung
- eines wirtschaftlichen, benutzungs- und wartungsfreundlichen Verfahrens zur Herstellung eines Wärmetauschelementes
- des über dieses Verfahren erhaltenen Elementes
- einer Klimatisierungsanlage, die dieses Element verwendet.

Diese Aufgabe wird durch ein Verfahren gelöst, das gemäß den Patentansprüchen ausgeführt wird.

Das Verfahren umfasst die Schritte des Anspruchs 1.

Bevorzugter Weise weist das Element mindestens eine Kanal auf. Bei einem bevorzugten Ausführungsverfahren liegt die Einbrenntemperatur nicht unterhalb 300° C. Als organische Masse werden Pulver organischen Materials verstanden: Holzmehl, organische Mehle und/oder Schlamm aus Kläranlagen.

Diese organische Masse liegt zwischen 10% und 60% des Massenvolumens vor dem Einbrennen. Während des Einbrennschrittes wird dieses Material derart bei hoher Temperatur verbrannt/zerstört, dass innerhalb des erfindungsgemäßen Elementes eine Porosität erzeugt wird. Diese Porosität erlaubt die kapillare Struktur innerhalb der des erfindungsgemäßen Elementes zu verändern. Zufolge dieser Änderung wird die kapillare Steiggeschwindigkeit zu steigern und es wird der das Volumen vergrößert, das für die Verdampfung innerhalb des erfindungsgemäßen Elementes zur Verfügung steht. Zufolge der aufgrund des erfindungsgemäßen Elementes induzierten Befeuchtung steigt das Wasser durch Kapillarität und der gesteigerte Kühleffekt wird auf die gesamte Masse des erfindungsgemäßen Elementes verteilt. Wiederholte Experimente zeigen, dass der Kühleffekt sich während des gesamten Zeitabschnittes, wo das erfindungsgemäße Element feucht bleibt, von der unteren Seite der Probe in Richtung der oberen Seite erhöht (als untere Seite des erfindungsgemäßen Elementes wird jene verstanden, von der aus der Befeuchtungsprozess ausgeht). Die Außenflächen des Elementes weisen eine im allgemeinen niedrigere Temperatur gegenüber des Inneren der Masse des erfindungsgemäßen Elementes auf.

Um die abzukühlende Fluidströmung im erfindungsgemäßen Elemente zu ermöglichen, ist eine Reihe von Kanälen vorhanden. Diese Kanäle können auch wie eine Serpentine derart angeordnet sein, dass eine längere Strecke des abzukühlenden Fluids und daher ein längerer Aufenthalt im Kontakt mit der Tauschfläche erlaubt werden. Mit der Analyse der Test wurde das Verhalten eines auf herkömmliche Art hergestellten Tonelementes mit einem erfindungsgemäßen Element verglichen.

Aus den erhaltenen Diagrammen geht hervor, dass der herkömmliche Ziegel einen weniger effizientes anfängliches Kühlverhalten, jedoch dem erfindungsgemäßen Element ähnliches, besitzt, während das erfindungsgemäße Element in der Zeit seine Kühlkapazitäten stabiler und sehr viel länger beibehält.

Diese Tatsache ist auf die sehr höhere Porosität im erfindungsgemäßen Element zurückzuführen, die es erlaubt, sehr höhere Wasservolumina zu speichern und einen rascheren kapillaren Aufstieg und daher einen ebenso raschen Austausch des im Kühlprozess verdampften Wassers zu ermöglichen, der durch den Körper des erfindungsgemäßen Elementes ausgeführt wird.

In einer bevorzugten Ausführungsform sind die Kanäle in den oberen 3/4 des erfindungsgemäßen Elementes angeordnet.

Mit mindestens einem, durch das erfindungsgemäße Verfahren ausgeführten Element, kann zum Beispiel eine Klimatisierungsanlage für ein Haus hergestellt werden. Das erfindungsgemäße Element wird in einen Kreislauf eingefügt, wo das zu kühlende Fluid zum Beispiel Wasser fließt. Mindestens ein Kanal speist mindestens ein erfindungsgemäßes Element. Um die Zufuhr zu erleichtern kann ein Gebläse vorgesehen sein, das die Strömung durch das erfindungsgemäße Element hindurch zwängt. In einer bevorzugten Form liegt das erfindungsgemäße Element auf einer Wanne auf, die mit einem von verdampfenden Fluid, zum Beispiel Wasser, gespeist wird. Zwischen der Wanne und dem erfindungsgemäßen Element kann auch eine nicht gewebte Stoffbahn zwischengeschaltet sein, die durch Wasser gesättigt wird. Alternativ wird das Wasser zu Befeuchtung des erfindungsgemäßen Elementes in einen Kanal eingebracht, der im unteren Viertel des erfindungsgemäßen Elementes ausgeführt ist. Der Kanal ist mit nicht gewebtem Stoff gefüllt.

Innerhalb des erfindungsgemäßen Elementes können die Kanäle verglaste Kanäle aufweisen oder in den Kanal kann zum Beispiel ein Rohr eingefügt sein. Um eine optimale Leitfähigkeit zu erhalten, kann das Rohr beispielsweise aus Kupfer bestehen.

Beim Durchlauf des erfindungsgemäßen Elementes kann die Strömung des abzukühlenden Fluids durch einen Wärmetauscher hindurch fließen, um die Feuchtigkeit des abzukühlenden Fluids zu reduzieren. Das Fluid, das vom Wärmetauscher stammt, kann in Richtung des erfindungsgemäßen Elementes zurückgebracht werden, um eine kontinuierliche Zufuhr des abzukühlenden Fluids sicherzustellen.

Weitere Merkmale gehen ohne darauf begrenzt sein aus der Zeichnung und aus der beschriebenen, bevorzugten Ausführungsform hervor. Es zeigen:
Figur 1 ein erfindungsgemäßes Element,
Figur 2 ein weiteres erfindungsgemäßes Element,
Figur 3 eine Tabelle über den Temperaturverlauf in einem herkömmlichen Element und einem gemäß der Erfindung,
Figur 4 eine Anlage, die ein erfindungsgemäßes Element umfasst, und
Figur 5 eine weitere Anlage, die ein erfindungsgemäßes Element umfasst.

Das erfindungsgemäße Element ist mit der Bezugsziffer 100 angegeben. Dieses Element ist auf der Basis von Ton mit organischer Masse hergestellt. Besonders vorteilhaft hat sich der Gletscherton gezeigt. Die organische Masse kann zum Beispiel in enthalten sein. Dieser Schlamm kann bis zu 20% der organischen Masse ausmachen. In einer bevorzugten Ausführungsform wird die Zugabe von mindestens 10% in Volumen von organischer Masse bis zu 60% vorgesehen. Diese organische Masse kann zum Beispiel Klärschlamm mit 20% bis zu 60% im Volumen der organischer Masse sein. Nach der Bildung des Körpers 101 des erfindungsgemäßen Elementes 100 wird in einer bevorzugten Ausführungsform eine Reihe von Kanälen 103 ausgeführt. Das Element wird bei mindestens 300° C eingebrannt. Während diesem Einbrennschritt wird die organische Masse verbrannt/zerstört.

Die Kanäle 103 könnten auch nach dem Einbrennen zum Beispiel durch Bohren hergestellt werden.

Diese Kanäle sind bevorzugter Weise im oberen 3/4 des Körpers des erfindungsgemäßen Elementes angeordnet.

Diese Kanäle 103 können verkleidet sein oder es kann zum Beispiel ein Kupferrohr eingebracht sein.

Diese Kanäle sind der Art angeordnet, dass der Durchgang einer abzukühlenden Fluidströmung zum Beispiel Luft erlaubt wird.

Um eine verdampfende Fluidzuführung sicherzustellen kann eine Wanne 104 und/oder eine Kanal 102 vorgesehen sein, die Flüssigkeit der fördern oder enthalten, die verdampft und aufgrund des kapillaren Effektes in das gesamte Element 101 gemäß der Erfindung gefördert wird.

Im Kanal 102 kann ein Stoff anwesend sein, der die Flüssigkeit absorbiert und sie dann kontinuierlich freigibt.

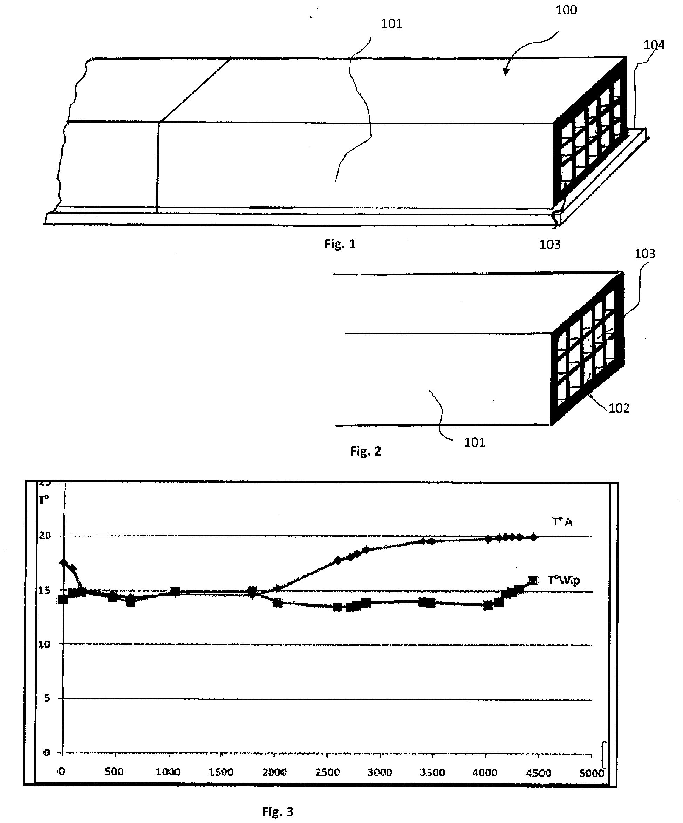

In Figur 3 ist ein Diagramm dargestellt, das die durch ein herkömmliches Element abgekühlte Flüssigkeit und eine gemäß der Erfindung vergleicht. Es ist zu bemerken, dass anfänglich das Verhalten sehr ähnlich ist, jedoch nach ein wenig Zeit das erfindungsgemäße Element erheblich effizienter ist

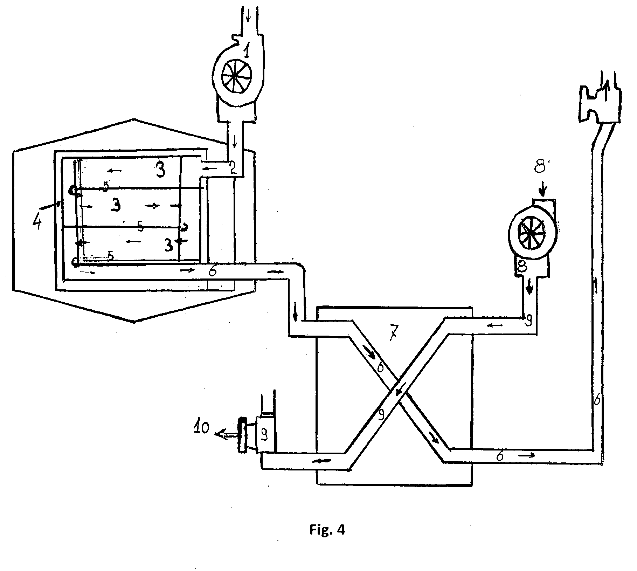

In Figur 4 ist eine Anlage dargestellt, die ein erfindungsgemäßes Element 4 umfasst. Das abzukühlende Fluid, zum Beispiel Luft, tritt in ein Gebläse 1 ein. Die Fluidströmung 2 wird durch die Kanäle 3 des erfindungsgemäßen Elementes 4 gedrückt. Durch das erfindungsgemäße Element 4 hindurch fließt ein Verdampfungsfluid zum Beispiel Wasser. Am Ausgang wird das gekühlte Fluid 6 durch einen Wärmetauscher 7 durchgeführt. Nach der Durchführung durch den Wärmetauscher 7 wird das Fluid 6 zum Beispiel in die Umgebung ausgestoßen. Ein Fluid 8 wird von außen zum Beispiel Luft angeschaut, das Fluid wird dann durch den Wärmetauscher 7 durchgedrückt, wobei das Fluid 9 durch das Fluid 6 abgekühlt und dann in die zu klimatisierende Umgebung über das Ventil 10 eingebracht wird.

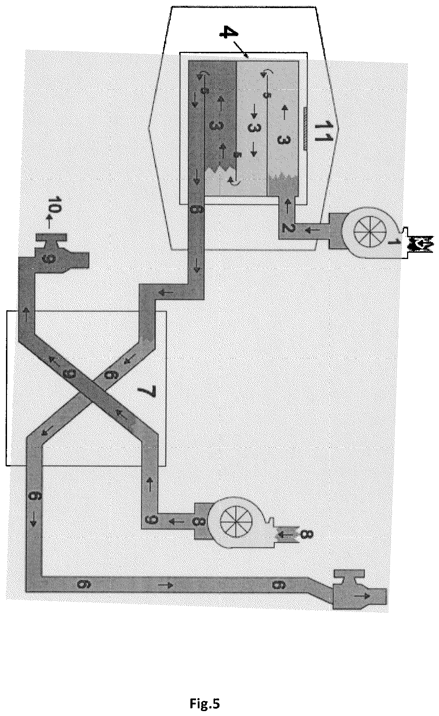

In Figur 5 ist eine Anlage dargestellt, die ein erfindungsgemäßes Element 4 umfasst. Das abzukühlende Fluid, zum Beispiel Luft, tritt in ein Gebläse 1 ein. Die Fluidströmung 2 wird durch die Kanäle 3 des erfindungsgemäßen Elementes 4 gedrückt. Durch das erfindungsgemäße Element 4 hindurch fließt ein Verdampfungsfluid zum Beispiel Wasser. Um die Leistung des erfindungsgemäßen Elementes zu verbessern, ist ein Vorkühlelement 11 am erfindungsgemäßen Element angebracht. Dieses Vorkühlelement 11 kann eine Wärmepumpe sein. Diese Wärmepumpe bringt das erfindungsgemäße Element auf eine tiefere Temperatur. So kann man den Temperaturrange ändern, innerhalb dem das erfindungsgemäße Element arbeitet.

Am Ausgang wird das gekühlte Fluid 6 durch einen Wärmetauscher 7 durchgeführt.

Nach der Durchführung durch den Wärmetauscher 7 wird das Fluid 6 zum Beispiel in die Umgebung ausgestoßen. Ein Fluid 8 wird von außen zum Beispiel Luft angeschaut, das Fluid wird dann durch den Wärmetauscher 7 durchgedrückt, wobei das Fluid 9 durch das Fluid 6 abgekühlt und dann in die zu klimatisierende Umgebung über das Ventil 10 eingebracht wird.

Es ist schließlich klar, dass dem Verfahren zur Herstellung eines Wärmetauschelementes, dem mit diesem Verfahren erhaltene Element und einer dieses Element verwendende Klimatisierungsanlage, die bis jetzt beschrieben wurden, Zusätze, Änderungen oder für den Fachmann selbstverständliche Varianten, vorgenommen werden können, ohne den durch die beigelegten Patentansprüche festgelegten Schutzbereich zu verlassen.

## Patentansprüche

1. Verfahren zur Herstellung eines Wärmetauschelementes, umfassend die folgenden Schritte:
Vorbereitung einer Tonmasse,
Zugabe einer organischen Masse Pulver,
Bildung eines Elementes,
Einbrennen auf einer Temperatur oberhalb von 300°C, **dadurch gekennzeichnet, dass** die organische Masse Pulver eines Holzmehl, organische Mehle und/oder Klärschlamm ist.

2. Verfahren nach Anspruch 1, **dadurch gekennzeichnet, dass** die organische Masse ein Volumen zwischen 10% und 60% der gesamte Masse vor dem Einbrennen besitzt.

3. Verfahren nach Anspruch 1 oder 2, **dadurch gekennzeichnet, dass** die organische Masse Klärschlamm mit einem Volumen von 20 bis 30% der gesamten Masse vor dem Einbrennen ist.

4. Wärmetauschelement für die Abkühlung eines Fluidstromes, das durch das Verfahren nach Anspruch 1 hergestellt ist.

5. Element nach Anspruch 4, **dadurch gekennzeichnet, dass** mindestens ein Kanal in den oberen 3/4 des Elementes angeordnet ist.

6. Element nach einem der Ansprüche von 4 und 5 **dadurch gekennzeichnet, dass** mindestens ein Kanal verglaste Wände aufweist.

7. Element nach einem der Ansprüche 5, 6 **dadurch gekennzeichnet, dass** innerhalb des mindestens einen Kanals ein Rohr eingebracht ist.

8. Element nach Anspruch 7, **dadurch gekennzeichnet, dass** das Rohr aus Kupfer besteht.

9. Klimatisierungsanlage, **dadurch gekennzeichnet dass** sie ein Element gemäß einem der Patentansprüche von 4 bis 8 umfasst, über das eine abzukühlende Fluidströmung hindurchgeführt wird.

10. Klimatisierungsanlage nach Anspruch 9, **dadurch gekennzeichnet, dass** diese Strömung durch mindestens ein Gebläse erzeugt wird, das das Element speist und dass das Element mindestens ein verdampfendes Fluid kontaktiert und dass die Strömung über einen Wärmetauscher fließt, um die Feuchtigkeit der Strömung zu reduzieren.

11. Klimatisierungsanlage nach Anspruch 9 oder 10 **dadurch gekennzeichnet, dass** ein Vorkühlelement (11) am Element (4) angebracht ist.

12. Klimatisierungsanlage nach Anspruch 11, **dadurch gekennzeichnet, dass** das Vorkühlelement (11) eine Wärmepumpe ist.

## Claims

1. A method of making a heat-exchanging element comprising the steps of:
preparing a mass of clay,
adding a powdered organic mass,
forming an element,
firing at a temperature of more than 300°C,
**characterized in that** the organic mass is sawdust,
organic flours and/or sewage sludge.

2. A method as claimed in claim 1, **characterized in that** the organic mass has a volume ranging from 10% to 60% of the entire mass before firing.

3. A method as claimed in claim 1 or 2, **characterized in that** the organic mass is sewage sludge whose volume ranges from 20 to 30 % of the entire mass before firing.

4. A heat-exchanging element for cooling a fluid flow, that is obtained by means of a method as claimed in claim 1.

5. An element as claimed in claim 4, **characterized in that** at least one channel is arranged in the upper 3/4 of the element.

6. An element as claimed in one of claims 4 and 5, **characterized in that** said at least one channel has vitrified walls.

7. An element as claimed in one of claims 5 and 6, **characterized in that** a pipe is inserted in said at least one channel.

8. An element as claimed in claim 7, **characterized in that** the pipe is made of copper.

9. An air-conditioning system **characterized in that** it comprises an element as claimed in one of claims 4 to 8 through which is a fluid flow to be cooled is conveyed.

10. An air-conditioning system as claimed in claim 9, **characterized in that** this flow is generated by at least one fan which feeds the element and that the element contacts at least one evaporating fluid and that the flow passes through a heat exchanger to reduce the moisture content of the flow.

11. An air-conditioning system as claimed in claim 9 or 10, **characterized in that** a precooling element (11) is fixed to the element (4).

12. An air-conditioning system as claimed in claim 11, **characterized in that** the precooling element (11) is a heat pump.

## Revendications

1. Procédé de fabrication d'un élément échangeur de chaleur comprenant les étapes consistant à :
préparer une masse d'argile,
ajouter une matière organique en poudre,
former un élément,
cuire à une température supérieure à 300°C,
**caractérisé en ce que** la masse organique est sciure,
farines organiques et/ou boues d'épuration.

2. Procédé selon la revendication 1, **caractérisé en ce que** la masse organique a un volume allant de 10 % à 60 % de l'ensemble de la masse avant la cuisson.

3. Procédé selon la revendication 1 ou 2, **caractérisé en ce que** la masse organique est constituiée de boues d'épuration dont le volume varie de 20 à 30 % de l'ensemble de la masse avant la cuisson.

4. Élément échangeur de chaleur permettant de refroidir un écoulement de fluide, obtenu par un procédé selon la revendication 1.

5. Élément selon la revendication 4, **caractérisé en ce qu'**au moins un canal est situé dans les 3/4 supérieurs de l'élément.

6. Élément selon l'une des revendications 4 et 5, **caractérisé en ce que** ledit au moins un canal possède des parois vitrifiées.

7. Élément selon l'une des revendications 5 et 6, **caractérisé en ce qu'**un tuyau est insérée dans ledit au moins un canal.

8. Élément selon la revendication 7, **caractérisé en ce que** le tuyau est en cuivre.

9. Système de climatisation **caractérisé en ce qu'**il comprend un élément selon l'une des revendications 4 à 8 à travers lequel est transporté un écoulement de fluide.

10. Système de climatisation selon la revendication 9, **caractérisé en ce que** cet écoulement est généré par au moins un ventilateur alimentant l'élément et **en ce que** l'élément vient en contact avec au moins un fluide en évaporation et **en ce que** l'écoulement de fluide passe à travers un échangeur de chaleur pour réduire la teneur en humidité de l'écoulement.

11. Système de climatisation selon la revendication 9 ou 10, **caractérisé en ce qu'**un élément prérefroidisseur (11) est fixé à l'élément (4).

12. Système de climatisation selon la revendication 11, **caractérisé en ce que** l'élément prérefroidisseur (11) est une pompe à chaleur.
